# EUROPÄISCHE PATENTSCHRIFT

(11) **EP 3 395 767 B1**
(45) Veröffentlichungstag und Bekanntmachung des Hinweises auf die Patenterteilung: **12.06.2019**
(21) Anmeldenummer: 17168213.1
(22) Anmeldetag: 26.04.2017
(51) Int. Cl.: C02F 1/44, B01D 61/02

(54) **UMKEHROSMOSE-MODUL MIT KOAXIALEM INNENROHR**
REVERSE OSMOSIS MODULE WITH COAXIAL INTERNAL PIPE
MODULE D'OSMOSE INVERSE AVEC CONDUIT INTERN COAXIAL

(43) Veröffentlichungstag der Anmeldung: 31.10.2018
(73) Patentinhaber: DWA Dialyse-Wasser-Aufbereitungsanlagen GmbH & Co. KG, 76698 Ubstadt-Weiher (DE)
(72) Erfinder: Walther, Paul, 76669 Bad Schönborn (DE)
(74) Vertreter: Durm Patentanwälte PartG mbB

(56) Entgegenhaltungen:
- US-A- 5 078 876
- US-A1- 2016 207 001
- US-A1- 2016 354 725

## Beschreibung

Die Erfindung betrifft ein Modul für die Umkehrosmose, insbesondere zur Erzeugung von Reinstwasser für die Hämodialyse.

Die Erzeugung des Reinstwassers, auch Permeat genannt, erfolgt durch den Prozess der Umkehrosmose oder Reversosmose. Dabei wird der natürliche Osmose-Prozess mittels Druck umgekehrt, um die Konzentration von im Rohwasser gelösten Stoffen herabzusetzen. Das zentrale Funktionselement einer Umkehrosmose-Anlage ist eine semipermeable Membran, welche das zugeführte Rohwasser in Reinstwasser (Permeat) und Konzentrat trennt.

Bei einem Wickelmodul werden zwei permeable Membrane, getrennt durch Distanzhalter, mit der Stützschicht gegeneinander spiralförmig um ein zentrales Permeat-Sammelrohr gewickelt. Die Membranrückseiten und der Distanzhalter werden dabei am Rand miteinander verklebt. Das Sammelrohr hat quer zur Längsachse verlaufende Bohrungen, die über seine gesamte Länge verteilt sind. Durch diese Bohrungen gelangt das gewonnene Permeat in das Innere des Sammelrohrs. Die gesamte Anordnung sitzt in einem langgestreckten Druckzylinder, der an seinem einen Ende einen Einlass für Rohwasser und an seinem gegenüberliegenden Ende einen Auslass für das Konzentrat hat. Es gibt auch Wickelmodule mit einem Paket von Verbundmembranen, die gemeinsam um das Sammelrohr gewickelt sind.

Umkehrosmosegeräte bestehen im Wesentlichen aus einer Hochdruckpumpe zur Erzeugung des notwendigen Drucks sowie wenigstens einem Umkehrosmose-Modul mit Membranelement und Druckzylinder. Größere Geräte oder Anlagen umfassen mehrere solche Module. Dabei können die einzelnen Module parallel oder in Reihe geschaltet werden.

Bei der Parallelschaltung teilt sich der Rohwasser-Eingangsfluss vor dem ersten Umkehrosmose-Modul auf und jedes Modul erzeugt eine bestimmte Menge an Permeat und Konzentrat. Im Anschluss werden die Permeat- und Konzentratflüsse der einzelnen Module zusammengeführt.

Bei der Reihenschaltung fließt das gesamte Rohwasser zunächst durch das erste Umkehrosmose-Modul, das abhängig von Druck, Temperatur und Durchfluss eine gewisse Menge an Permeat produziert. Das Konzentrat wird nicht verworfen, sondern dem nächsten Modul zugeführt. Am letzten Modul der Reihe fließt das Konzentrat ab und wird entsorgt. Das Permeat des letzten Moduls wird zurück in das vorletzte Modul der Reihe geleitet und vereinigt sich in dessen Sammelrohr mit dem in diesem Modul gewonnenen Permeat. So geht dies weiter, bis am ersten Modul die maximale Menge an Permeat zur Verfügung steht und in weiterführende Leitungen abgepumpt werden kann.

Die standardmäßig verfügbaren Membranelemente haben Permeat-Sammelrohre, die an beiden Enden offen sind. Wird nun ein solches Membranelement in einem Umkehrosmose-Modul verwendet, welches entweder das einzige Modul ist oder, in einer größeren Anlage, das letzte Modul einer Reihenschaltung oder Teil einer Parallelschaltung, so hat dieses Modul nur einen einzigen Permeat-Auslass an einem seiner zwei Enden. Im Bereich des jeweils gegenüberliegenden Endes des Moduls, das verschlossen ist, entsteht ein nicht durchströmter Bereich, ein so genannter Totraum. In diesem Totraum kann sich, je nach Einbaulage und Betriebsbedingungen, stehendes Wasser oder im ungünstigen Fall auch ein Luftpolster bilden. Speziell in der Hämodialyse sind solche Toträume oder ungenügend durchströmte Zonen problematisch, da sich darin Keime ansammeln und als Biofilm an den Wänden ablagern können. Außerdem können sich hier Rückstände von Chemikalien wie zum Beispiel Desinfektionsmittel ansammeln, die nur schwer entfernbar sind. Bei den regelmäßig erforderlichen Spülungen mit Desinfektionslösung oder heißem Wasser werden Zonen mit undefiniertem Fluss oder stehendem Wasser unzureichend oder gar nicht erreicht.

US 2016/0354725 A1 beschreibt ein Umkehrosmose-Modul mit mehreren Membranelementen bzw. RO-Modulen. Die Permeatausgänge eines jeden dieser Module werden voneinander getrennt geführt, statt wie üblich bereits im Modulrohr vereinigt. Bei dem Modulrohr mit vier Membranelementen ergeben sich vier Toträume, die nicht durchströmt sind.

US 2016/0207001 A1 zeigt und beschreibt ein Umkehrosmose-Modul mit einem Membranelement, in dessen Sammelrohr sich ein weiteres Membranelement befindet. Damit ist eine doppelte Wasseraufbereitung mit nur einer einzigen Pumpe und einem einzigen Modulrohr möglich.

US 5,078,876 beschreibt ein mehrstufiges Wasserfilter mit mehreren, koaxial in einem gemeinsamen Gehäuse angeordneten Filterstufen. Eine dieser Filterstufen ist ein Umkehrosmose-Modul mit einem Membranelement, in dessen Sammelrohr sich ein weiterer Filter befindet. Das innenliegende Rohr mit dem Filter ist nicht dazu vorgesehen, Wasser zu führen.

Das zu lösende technische Problem besteht also darin, ein Umkehrosmose-Modul mit nur einem Auslass für Permeat so auszubilden, dass zwar nach wie vor Standard-Membranelemente mit beidseits offenem Permeat-Sammelrohr eingesetzt werden können, gleichwohl aber Zonen undefinierter Durchströmung oder gar Toträume im Bereich beider Enden des Permeat-Sammelrohrs vermieden werden.

Bei der Lösung dieser Aufgabe wird ausgegangen von einem Umkehrosmose-Modul mit Druckzylinder und mindestens einer, um ein zentrales Sammelrohr gewickelter Osmosemembran, wie im Oberbegriff des ersten Patentanspruchs angegeben.

Gelöst wird die Aufgabe durch die im Kennzeichen des Patentanspruchs 1 angegebenen Merkmale.

Erfindungsgemäß sitzt in dem Permeat-Sammelrohr ein koaxiales Innenrohr und ist zwischen der Außenwand des Innenrohrs und der Innenwand des Sammelrohrs ein kreisförmiger Sammelkanal ausgebildet. Im Bereich des Endes des Sammelrohrs, das dem Permeat-Auslass gegenüberliegt, befindet sich eine geschlossene Überströmkammer, in welche der Sammelkanal mündet. Das koaxiale Innenrohr verbindet die Überströmkammer mit dem Permeat-Auslass. Dadurch kann Permeat aus dem Ende des kreisringförmigen Sammelkanals in das Innenrohr überströmen, um dann in entgegengesetzter Richtung zum Permeat-Auslass zu fließen.

Der Fluss des Permeats in Richtung der Überströmkammer und von da durch das Innenrohr zurück in Richtung Permeat-Auslass wird erzwungen durch einen Strömungswiderstand, der in dem Sammelkanal sitzt, und zwar im Bereich des von der Überströmkammer entfernten Endes des Sammelrohrs. Während der Hauptfluss des Permeats also zunächst in die Überströmkammer und sodann in die entgegengesetzte Richtung bis zum anderen Ende des Sammelrohrs fließt, strömt ein Teil des Permeats in entgegengesetzte Richtung durch den ringförmigen Sammelkanal und vereinigt sich am Ausgang des Sammelrohrs, nach Passieren des Strömungswiderstands, direkt mit dem dort ankommenden Hauptfluss durch das Innenrohr. Die erzeugte Menge von Permeat kann an dem einzigen Permeat-Auslass aus dem Druckzylinder entnommen werden.

Bei der erfindungsgemäßen Konstruktion ist sichergestellt, dass es praktisch keine strömungsfreien Zonen innerhalb des Permeat-Sammelrohrs gibt, und, vor allem, keine Totzonen.

Das durch die Querbohrungen in den Sammelkanal gelangte Permeat fließt teilweise in die eine Richtung, zur Überströmkammer hin, und teilweise in die entgegengesetzte Richtung direkt zum Permeat-Auslass. In dem Bereich, in dem die Fließrichtung wechselt, entsteht zwar unvermeidbar eine kleine Zone undefinierter Strömung, in der Regel zwischen zwei Querbohrungen; aber diese Zone ist nur sehr klein. Vor allem aber wandert diese Zone in axialer Richtung hin und her in Abhängigkeit des schwankenden Drucks, der am Permeat-Auslass des Umkehrosmose-Moduls herrscht. Deshalb führt die Zone undefinierter bzw. wechselnder Fließrichtung nicht zu einem problematischen Totraum mit den dadurch indizierten hygienischen Problemen. Es spielt somit auch nur eine untergeordnete Rolle, an welcher Stelle innerhalb des Sammelrohrs die Strömungsrichtung wechselt; wichtig ist nur, dass praktisch an jeder Stelle eine Strömung vorhanden ist und es keine Totzonen über einen längeren Zeitraum gibt.

Der Strömungswiderstand im Sammelkanal ist so bemessen, dass der überwiegende Teil des durch die Bohrung in den Sammelkanal gelangten Permeats zunächst zu der Überströmkammer fließt und nur ein kleinerer Teil des Permeats in die entgegengesetzte Richtung direkt zum Auslass strömt. Dadurch wird die Zone mit undefinierten bzw. wechselnden Strömungsverhältnissen auf ein Minimum reduziert.

Der Strömungswiderstand sitzt am Ende des Sammelrohrs, und zwar an dem Ende, welches der Überströmkammer gegenüberliegt bzw. das zum Permat-Auslass weist. Dies erleichtert vor allem die nachträgliche Montage des Strömungswiderstands an einem Membranelement, das standardmäßig mit beidseits offenem Sammelrohr ausgeliefert wurde. Zweckmäßig schließt der Strömungswiderstand das Ende des Sammelrohrs ab.

Der Strömungswiderstand kann sehr einfach realisiert werden, beispielsweise und bevorzugt durch eine kreisringförmige Lochscheibe, die auf das koaxiale Innenrohr aufgeschoben und/oder auf das freie Ende des Sammelrohrs aufgesetzt wird. Die Größe und Anzahl der Löcher bestimmt den Widerstand und damit das Verhältnis zwischen dem Teilfluss des Permeats, der über die Überströmkammer fließt, und dem Teil, der direkt zum Auslass strömt.

Der Druckzylinder, der das Membranelement beherbergt, besteht vorzugsweise aus einem offenen zylindrischen Rohr, auf dessen zwei gegenüberliegenden Enden jeweils ein Moduldeckel sitzt. Diese Deckel sind im Prinzip gleich ausgebildet und haben die Form eines Flansches mit einem nach außen weisenden Anschlussstutzen und einem kurzen koaxialen Lagerrohr mit offenem Ende. Die Enden des Sammelrohres stecken ein Stück weit in den gegeneinander weisenden Lagerrohren, welche somit Lagerbuchsen für das Sammelrohr bilden. Der Anschlussstutzen des einen Moduldeckels ist offen und bildet damit den Auslass für das Permeat. Der Anschlussstutzen des anderen Moduldeckels am anderen Ende des Druckrohrs ist dagegen flüssigkeits- und druckdicht verschlossen, zum Beispiel mittels einer eingeschraubten Verschlusskappe.

Vorzugsweise ist die Überströmkammer, in welche der Sammelkanal mündet, in dem verschlossenen Moduldeckel ausgebildet und wird zum Beispiel durch den Anschlussstutzen definiert.

Das in das Sammelrohr eingesetzte Innenrohr ist vorteilhaft länger als das Sammelrohr, ragt also aus dem Sammelrohr ein Stück hinaus. Bei einer besonders vorteilhaften Ausführungsform der Erfindung erstreckt sich das Innenrohr bis in den Anschlussstutzen hinein, vorzugsweise bis nahe an das Ende des verschlossenen Anschlussstutzens. Das in das Sammelrohr eindringende Permeat strömt durch einen Ringspalt, der von der Außenseite des Innenrohrs und der Innenseite des Anschlussstutzens definiert ist, bis fast an die Verschlusskappe. Erst dort dreht sich die Fließrichtung um und das gesammelte Permeat fließt in entgegengesetzter Richtung durch das Innenrohr in Richtung des Permeat-Auslasses am anderen Ende des Druckzylinders.

Alternativ kann das Innenrohr aber auch kürzer sein als das Sammelrohr. In diesem Fall ist die Überströmkammer ganz oder teilweise innerhalb des Sammelrohrs ausgebildet, im Bereich dessen einen Endes. Das dem Permeat-Auslass gegenüberliegende Ende des Sammelrohrs kann verschlossen sein. In diesem Fall endet das Innenrohr kurz vor dem verschlossenen Ende, sodass die Überströmkammer ganz innerhalb des Sammelrohrs ausgebildet ist.

Da der Fluss des Rohwassers in axialer Richtung durch das Membranelement unabhängig ist von dem Fluss des Permeats innerhalb des Sammelrohrs, kann der Permeat-Auslass entweder an derselben Seite vorgesehen sein wie der Konzentrat-Auslass oder alternativ an der anderen Seite, an der sich der Rohwasser-Einlass befindet. Welcher von zwei identisch ausgebildeten Moduldeckeln die Überströmkammer beherbergt oder den Permeat-Auslass bildet, richtet sich allein danach, ob der jeweilige Anschlussstutzen offen oder verschlossen ist.

Ein Ausführungsbeispiel der Erfindung wird nachstehend anhand der beigefügten Abbildungen beschrieben. Es zeigen:

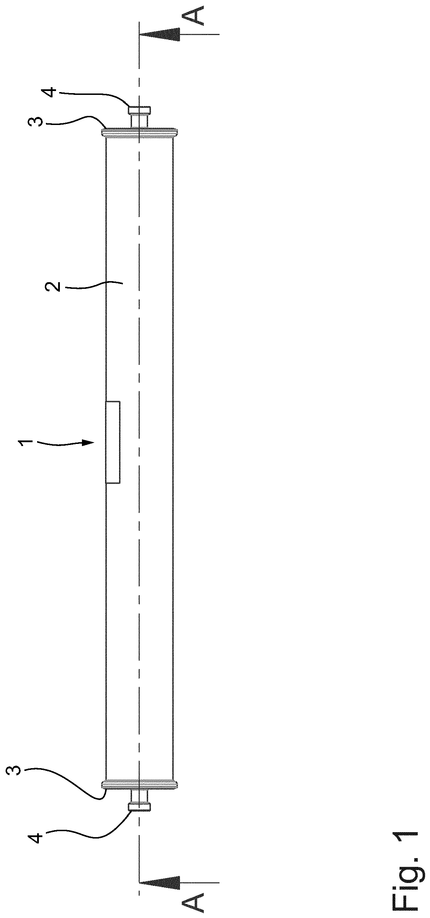

- Figur 1: ein Umkehrosmose-Modul in einer vereinfachten Seitenansicht;
- Figur 2a: das linke Ende des Umkehrosmose-Moduls von Figur 1, in einem Horizontalschnitt entlang der Linie A-A;
- Figur 2b: das rechte Ende des Umkehrosmose-Moduls von Figur 1, in einem Horizontalschnitt entlang der Linie A-A.

Das Umkehrosmose-Modul hat einen langgestreckten Druckzylinder 1 umfassend ein Druckrohr 2 mit rundem Querschnitt und zwei, an den Enden aufgesetzten Moduldeckeln 3, die im Wesentlichen gleich ausgebildet sind. Druckrohr 2 und Moduldeckel 3 bestehen aus Edelstahl, können aber auch aus anderem druckfesten Material wie z. B. Kunststoff sein.

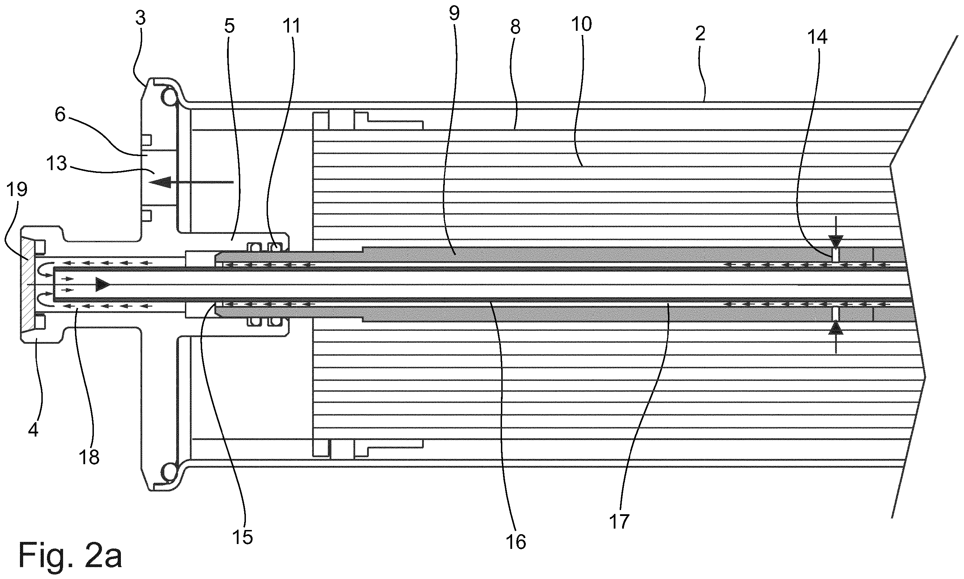

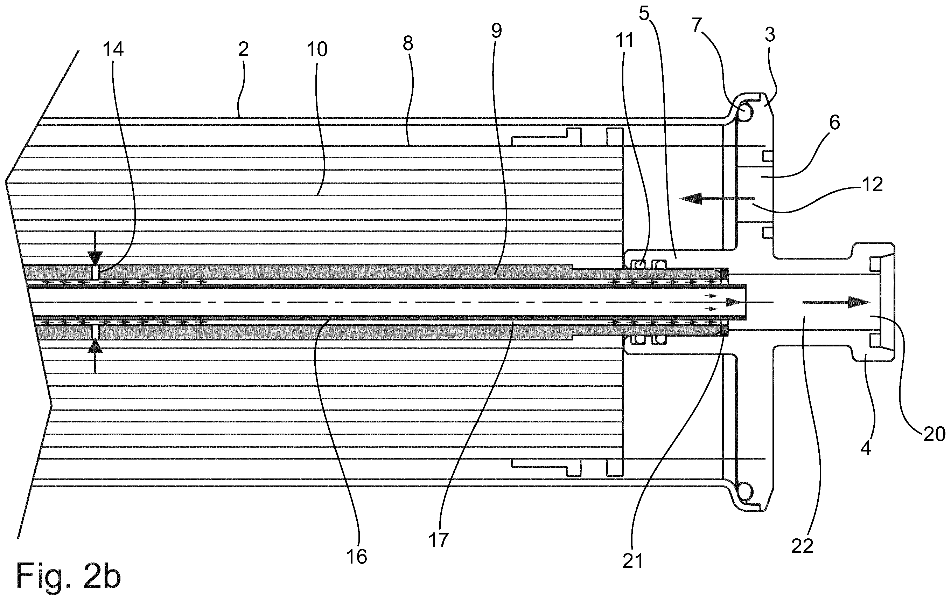

Wie aus Figur 2 ersichtlich, sind die Moduldeckel 3 in der Art eines Flansches ausgebildet. Die Moduldeckel 3 haben an ihrer Außenseite einen Anschlussstutzen 4, der an der Innenseite in ein koaxiales Lagerrohr 5 übergeht. Daneben haben die Moduldeckel 3 jeweils eine außermittige Öffnung 6. Zwischen den Enden des Druckrohrs 2 und den Rändern der Moduldeckel 3 sitzt jeweils eine umlaufende Dichtung 7.

Der Druckzylinder 1 beherbergt ein Membranelement 8. Um ein zentrales Sammelrohr 9 ist ein Paket semipermeabler Osmose-Membranen 10 spiralartig gewickelt. Hier nicht dargestellt ist der mehrschichtige Aufbau der Osmose-Membranen 10, die aus einer Trägerfolie und einem semipermeablen Polyamidfilm besteht. Zwischen den einzelnen Wickellagen ist ein netzartiger Distanzhalter (Spacer) angeordnet (nicht dargestellt), so dass das auf der Rückseite der Membran austretende Reinstwasser bzw. Permeat parallel zur Membranfläche abschließen kann.

Das Sammelrohr 9 steckt mit seinen beiden Enden in den gegeneinander weisenden Lagerrohren 5 der Moduldeckel 3 und ist auf diese Weise zwischen den Moduldeckeln 3 gelagert. O-Ringe 11 dichten das Sammelrohr 9 gegen die Moduldeckel 3 ab.

Bei dem hier dargestellten Ausführungsbeispiel stellt die Öffnung 6 des rechten Moduldeckels 3 den Einlass 12 für das Rohwasser dar (vgl. Figur 2b). Unter dem Druck einer (nicht dargestellten) Pumpe durchströmt das Rohwasser das Membranelement 8 axial von rechts nach links und wird an der Osmose-Membran 10 vorbeigeführt. Das gewonnene Permeat gelangt durch kleine Bohrungen 14 in das Innere des Sammelrohrs 9. Die Bohrungen 14 sind in regelmäßigen Abständen über die gesamte axiale Länge des Sammelrohrs 9 angeordnet.

Die außermittige Öffnung 6 des linken Moduldeckels 3 (vgl. Figur 2a) bildet den Auslass 13 für das aus der Stirnseite des Membranelements 8 ausfließende Konzentrat. Dieses wird entweder verworfen oder kann alternativ einem nachgeschalteten zweiten Umkehrosmose-Modul zugeführt werden.

In dem Sammelrohr 9 sitzt im Bereich des linken Endes (Figur 2a) eine Zentrierung 15, die nur sehr geringen Strömungswiderstand hat. Ein koaxiales Innenrohr 16 ist in das Sammelrohr 9 eingeschoben. Das Innenrohr 16 ist länger als das Sammelrohr 9, so dass beide Enden des Innenrohrs 16 ein Stück aus dem Sammelrohr 9 herausragen. Zwischen der Innenseite des Sammelrohrs 9 und der Außenseite des Innenrohrs 16 ist ein im Querschnitt kreisringförmiger Sammelkanal 17 ausgebildet. Das Innenrohr 16 teilt somit den Innenraum des Sammelrohrs 9 in zwei koaxiale Strömungskanäle auf.

An der einen, hier linken Seite, mündet der Sammelkanal 17 in eine Überströmkammer 18, die in dem linken Moduldeckel 3 ausgebildet ist (Figur 2a). Hierzu ist der Anschlussstutzen 4 des Moduldeckels 3 durch eine Verschlusskappe 19 druckdicht verschlossen. Das Innenrohr 16 erstreckt sich in den Anschlussstutzen 4 hinein und endet erst kurz vor der Verschlusskappe 19. Die Überströmkammer 18 wird also im Wesentlichen begrenzt durch die Innenwand des Anschlussstutzens 4 und die Innenseite der Verschlusskappe 19.

Das Innenrohr 16 könnte im Prinzip auch kürzer sein als das Sammelrohr 9. Dann liegt die Überströmkammer 18 ganz oder teilweise innerhalb des Sammelrohrs 9.

Auf der gegenüberliegenden Seite, hier am rechten Ende des Druckzylinders 1 (vgl. Figur 2b), ist der Anschlussstutzen 4 des rechten Moduldeckels 3 offen und bildet damit den Permeat-Auslass 20, durch den das gewonnene Permeat aus dem Druckzylinder 1 entnommen wird.

An dem zum Permeat-Auslass 20 weisenden Ende des Sammelrohrs 9 ist ein Strömungswiderstand in Form einer kreisförmigen Lochscheibe 21 angeordnet. Die Lochscheibe sitzt in dem ringförmigen Sammelkanal 17 und schließt das Ende des Sammelrohrs 9 ab. Das in das Sammelrohr 9 eingeschobene Innenrohr 16 erstreckt sich durch eine zentrale Bohrung der Lochscheibe 21 hindurch, so dass es das Sammelrohr 9 ein kleines Stück überragt. Das Innenrohr 16 verbindet die Überströmkammer 18 mit einer Auslasskammer 22, die im Wesentlichen von dem Anschlussstutzen 4 des rechten Moduldeckels 3 gebildet wird.

Der Strömungswiderstand der Lochscheibe 21 ist so bemessen, dass der überwiegende Teil des durch die Bohrungen 14 in den Sammelkanal 17 eindringenden Permeats zunächst zu der Überströmkammer 18 (Figur 2a) fließt und von dort in die entgegengesetzte Richtung durch das Innenrohr 16 bis zum Permeat-Auslass 20. Nur ein relativ kleiner Teil des Permeats fließt in dem Sammelkanal 17 in die andere Richtung, in Figur 2b also nach rechts, direkt zum Permeat-Auslass 20. Dadurch ist gewährleistet, dass es in dem gesamten Innenraum des Sammelrohrs 9 keine tote Zone gibt, sondern das Permeat an jeder Stelle, entweder in die eine oder die andere Richtung fließt. Dabei kann der Punkt, an dem sich die Strömungsrichtung in dem Sammelkanal 17 umkehrt, entweder (wie in Figur 2b dargestellt) im Bereich der ersten bzw. letzten Bohrung 14 sein oder auch im Bereich einer der weiter innen liegenden Bohrungen. Entscheidend ist nicht, wo der Punkt der Umkehr der Fließrichtung ist, sondern vor allem, dass es praktisch keine Zone ohne Fluss gibt. In Abhängigkeit von dem momentanen Druck am Permeat-Auslass 20, der in gewissen Grenzen schwankt, wird sich die punktuelle Zone undefinierter Fließrichtung innerhalb kurzer Zeit in axialer Richtung verlagern, so dass eine Totzone, in der sich Ablagerungen oder gar ein Biofilm bilden könnten, prinzipbedingt nicht auftreten können.

Bei dem hier dargestellten Ausführungsbeispiel befindet sich der Permeat-Auslass 20 an der rechten Seite des Druckzylinders 1 (Figur 2b) und damit an derselben Seite wie der Einlass 12 für das Rohwasser. Der Permeat-Auslass 20 könnte ebenso gut auch auf der anderen Seite, also am linken Moduldeckel 3 (vgl. Figur 2a) sein, sofern der dortige Anschlussstutzen 4 offen bleibt.

In diesem Fall müsste dann der Anschlussstutzen 4 des rechten Moduldeckels 3 (vgl. Figur 2b) druckdicht verschlossen werden. Ferner müsste der Strömungswiderstand bzw. die Lochscheibe 21 auf die andere Seite verlegt werden; die Auslasskammer 22 würde dann zur Überströmkammer 18.

### Bezugszeichen

- 1: Druckzylinder
- 2: Druckrohr
- 3: Moduldeckel
- 4: Anschlussstutzen
- 5: Lagerrohr
- 6: Öffnung (in 3)
- 7: Dichtung
- 8: Membranelement
- 9: Sammelrohr
- 10: Osmose-Membran
- 11: O-Ring
- 12: Einlass (Rohwasser)
- 13: Auslass (Konzentrat)
- 14: Bohrungen (in 9)
- 15: Zentrierung
- 16: Innenrohr
- 17: Sammelkanal
- 18: Überströmkammer
- 19: Verschlusskappe
- 20: Permeat-Auslass
- 21: Strömungswiderstand (Lochscheibe)
- 22: Auslasskammer

## Patentansprüche

1. Umkehrosmose-Modul, umfassend
einen langgestreckten Druckzylinder mit einem Einlass für Rohwasser an seinem einen Ende, einem Auslass für Konzentrat an seinem anderen Ende sowie einem Auslass für das gewonnene Permeat an einem der beiden Enden,
einem in dem Druckzylinder sitzenden Membranelement mit wenigstens einer semipermeablen Osmose-Membran, die um das Sammelrohr gewickelt ist, wobei das Sammelrohr eine Anzahl von Bohrungen für den Eintritt des gewonnenen Permeats hat,
**dadurch gekennzeichnet, dass**
in dem Sammelrohr (9) ein koaxiales Innenrohr (16) sitzt,
zwischen dem Innenrohr (16) und dem Sammelrohr (9) ein kreisringförmiger Sammelkanal (17) ausgebildet ist,
an dem Ende des Sammelrohrs (9), welches dem Permeat-Auslass (20) gegenüberliegt, eine geschlossene Überströmkammer (18) ausgebildet ist,
der Sammelkanal (17) in die Überströmkammer (18) mündet,
das Innenrohr (16) die Überströmkammer (18) mit dem Permeat-Auslass (20) verbindet,
in dem Sammelkanal (17) ein Strömungswiderstand (21) sitzt, wobei der Strömungswiderstand (21) so bemessen ist, dass der überwiegende Teil des durch die Bohrungen (14) in das Sammelrohr (9) eindringenden Permeats zunächst durch den Sammelkanal (17) zu der Überströmkammer (18) fließt und nur ein relativ kleiner Teil des Permeats in die entgegengesetzte Richtung direkt zum Permeat-Auslass (20) strömt und sich mit dem dort ankommenden Hauptfluss durch das Innenrohr vereinigt, wobei dass der Strömungswiderstand (21) im Bereich des Endes des Sammelohrs (9), welches zum Permeat-Auslass (20) weist, angeordnet ist.

2. Umkehrosmose-Modul nach einem der vorhergehenden Ansprüche, **dadurch gekennzeichnet, dass** der Strömungswiderstand (21) als kreisringförmige Lochscheibe ausgebildet ist.

3. Umkehrosmose-Modul nach einem der vorhergehenden Ansprüche,
**dadurch gekennzeichnet, dass**
der Druckzylinder (1) aus einem offenen Druckrohr (2) und zwei runden abnehmbaren Moduldeckeln (3) zusammengesetzt ist,
die Moduldeckel (3) an der Außenseite einen zentralen Anschlussstutzen (4) haben, der zur Innenseite hin in ein kurzes Lagerrohr (5) übergeht,
das Sammelrohr (9) in den Lagerrohren (5) der beiden Moduldeckel (3) gelagert ist,
der Anschlussstutzen (4) des einen Moduldeckels (3) offen ist und den Permeat-Auslass (20) bildet,
der Anschlussstutzen (4) des anderen Moduldeckels (3) am Ende verschlossen ist.

4. Umkehrosmose-Modul nach Anspruch 3, **dadurch gekennzeichnet, dass** die Überströmkammer (18) in dem verschlossenen Moduldeckel (3) ausgebildet ist.

5. Umkehrosmose-Modul nach einem der vorhergehenden Ansprüche, **dadurch gekennzeichnet, dass** das Innenrohr (16) über die Enden des Sammelrohrs (9) hinausragt und sich bis in den Anschlussstutzen (4) eines Moduldeckels (3) hinein erstreckt.

6. Umkehrosmose-Modul nach einem der Ansprüche 1-4, **dadurch gekennzeichnet, dass** das Innenrohr (16) kürzer ist als das Sammelrohr (9) und die Überströmkammer (18) ganz oder teilweise innerhalb des Sammelrohrs (9) im Bereich dessen einen Endes ausgebildet ist.

7. Umkehrosmose-Modul nach Anspruch 6, **dadurch gekennzeichnet, dass** das Sammelrohr (9) an seinem dem Permeat-Auslass gegenüberliegenden Ende verschlossen ist und die Überströmkammer (18) ganz innerhalb des Sammelrohrs (9) ausgebildet ist.

8. Umkehrosmose-Modul nach einem der vorhergehenden Ansprüche, **gekennzeichnet durch** eine Zentrierung (15), die das Innenrohr (16) in dem Sammelrohr (9) koaxial zentriert.

## Claims

1. Reverse osmosis module, comprising
an elongated pressure cylinder with an inlet for raw water at its one end, an outlet for concentrate at its other end, as well as an outlet for the obtained permeate at one of the two ends,
a membrane element sitting in the pressure cylinder with at least one semipermeable osmosis membrane, which is wound around the collecting pipe, wherein the collecting pipe has a number of boreholes for the entry of the obtained permeate,
**characterized in that**
a coaxial inner pipe (16) sits in the collecting pipe (9),
a circular collecting channel (17) is formed between the inner pipe (16) and collecting pipe (9),
a closed overflow chamber (18) is formed at the end of the collecting pipe (9) lying opposite the permeate outlet (20),
the collecting channel (17) empties into the overflow chamber (18),
the inner pipe (16) connects the overflow chamber (18) with the permeate outlet (20),
a flow resistor (21) sits in the collecting channel (17), wherein the flow resistor (21) is dimensioned in such a way that the predominant portion of the permeate that penetrates into the collecting pipe (9) through the boreholes (14) initially flows through the collecting channel (17) to the overflow chamber (18), and only a relatively small portion of the permeate flows in the opposite direction directly to the permeate outlet (20) and merges with the main flow coming in there through the inner pipe, wherein the flow resistor (21) is arranged in the area of the end of the collecting pipe (9) that faces the permeate outlet (20) .

2. The reverse osmosis module according to one of the preceding claims, **characterized in that** the flow resistor (21) is designed as a circular perforated disc.

3. The reverse osmosis module according to one of the preceding claims, **characterized in that**
the pressure cylinder (1) is composed of an open pressure pipe (2) and two round, removable module covers (3),
the exterior side of the module covers (3) has a central connecting piece (4), which transitions into a short bearing pipe (5) toward the interior side,
the collecting pipe (9) is mounted in the bearing pipes (5) of the two module covers (3),
the connecting piece (4) of the one module cover (3) is open, and forms the permeate outlet (20),
the connecting piece (4) of the other module cover (3) is sealed at the end.

4. The reverse osmosis module according to claim 3, **characterized in that** the overflow chamber (18) is formed in the sealed module cover (3).

5. The reverse osmosis module according to one of the preceding claims, **characterized in that** the inner pipe (16) protrudes over the ends of the collecting pipe (9), and extends until into the connecting piece (4) of a module cover (3).

6. The reverse osmosis module according to one of claims 1-4, **characterized in that** the inner pipe (16) is shorter than the collecting pipe (9), and the overflow chamber (18) is entirely or partially formed inside of the collecting pipe (9) in the area of its one end.

7. The reverse osmosis module according to claim 6, **characterized in that** the collecting pipe (9) is sealed at its end lying opposite the permeate outlet, and the overflow chamber (18) is formed entirely inside of the collecting pipe (9).

8. The reverse osmosis module according to one of the preceding claims, **characterized by** a centering device (15) that coaxially centers the inner pipe (16) in the collecting pipe (9).

## Revendications

1. Module d'osmose inverse, comprenant
un cylindre de pression allongé, présentant une entrée pour de l'eau brute en l'une extrémité, une sortie pour le concentrat en son autre extrémité ainsi qu'une sortie pour le perméat obtenu en l'une des deux extrémités,
un élément de membrane situé dans le cylindre de pression, présentant au moins une membrane d'osmose semi-perméable, qui est enroulée autour du conduit collecteur, le conduit collecteur présentant un certain nombre de trous pour l'entrée du perméat obtenu,
**caractérisé en ce que**
un conduit interne (16) coaxial est situé dans le conduit collecteur (9),
un canal collecteur (17) annulaire est formé entre le conduit interne (16) et le conduit collecteur (9),
une chambre de débordement (18) fermée est réalisée en l'extrémité du conduit collecteur (9) qui est à l'opposé de la sortie de perméat (20),
le canal collecteur (17) débouche dans la chambre de débordement (18),
le conduit interne (16) relie la chambre de débordement (18) à la sortie de perméat (20),
une résistance à l'écoulement (21) est située dans le canal collecteur (17), la résistance à l'écoulement (21) étant dimensionnée de manière telle que la majeure partie du perméat pénétrant à travers les trous (14) dans le conduit collecteur (9) s'écoule d'abord à travers le canal collecteur (17) vers la chambre de débordement (18) et seule une partie relativement petite du perméat s'écoule dans le sens opposé directement vers la sortie de perméat (20) et se combine avec le flux principal qui y arrive à travers le conduit interne,
la résistance à l'écoulement (21) étant disposée dans la zone de l'extrémité du conduit collecteur (9) orientée vers la sortie de perméat (20).

2. Module d'osmose inverse selon l'une quelconque des revendications précédentes, **caractérisé en ce que** la résistance à l'écoulement (21) est conçue sous forme d'un disque perforé annulaire.

3. Module d'osmose inverse selon l'une quelconque des revendications précédentes, **caractérisé en ce que** le cylindre de pression (1) est constitué par un conduit de pression ouvert (2) et par deux couvercles de module (3) ronds, amovibles,
les couvercles de module (3) présentent, sur leur côté externe, un manchon de raccordement (4) central qui se transforme, vers le côté interne, en un tube formant palier (5) court,
le conduit collecteur (9) est logé dans les tubes formant palier (5) des deux couvercles de module (3),
le manchon de raccordement (4) d'un des couvercles de module (3) est ouvert et forme la sortie de perméat (20),
le manchon de raccordement (4) de l'autre couvercle de module (3) est fermé en son extrémité.

4. Module d'osmose inverse selon la revendication 3, **caractérisé en ce que** la chambre de débordement (18) est réalisée dans le couvercle de module (3) fermé.

5. Module d'osmose inverse selon l'une quelconque des revendications précédentes, **caractérisé en ce que** le conduit interne (16) dépasse des extrémités du conduit collecteur (9) et s'étend jusque dans le manchon de raccordement (4) d'un couvercle de module (3).

6. Module d'osmose inverse selon l'une quelconque des revendications 1-4, **caractérisé en ce que** le conduit interne (16) est plus court que le conduit collecteur (9) et la chambre de débordement (18) est réalisée totalement ou partiellement à l'intérieur du conduit collecteur (9) dans la zone d'une des extrémités.

7. Module d'osmose inverse selon la revendication 6, **caractérisé en ce que** le conduit collecteur (9) est fermé en son extrémité opposée à la sortie de perméat et la chambre de débordement (18) est réalisée totalement à l'intérieur du conduit collecteur (9).

8. Module d'osmose inverse selon l'une quelconque des revendications précédentes, **caractérisé par** un centrage (15), qui centre le conduit interne (16) de manière coaxiale dans le conduit collecteur (9).
